# EUROPEAN PATENT APPLICATION

(11) **EP 4 071 221 A1**
(43) Date of publication of application: **12.10.2022**
(21) Application number: 21166954.4
(22) Date of filing: 06.04.2021
(51) Int. Cl.: C09J 5/02, C09J 5/04, B32B 7/12

(54) **METHOD FOR PREPARING AN ADHERED ARTICLE BY CONDUCTING SINGLE-SIDED GLUING**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a method for preparing an adhered article by conducting single-sided gluing, the adhered article prepared by said method, and the use of the adhered article in the production of footwear. The method comprises the steps of: a. applying a cleaning agent to at least one surface of a first substrate, and drying the surface of the first substrate to which the cleaning agent is applied; b. applying an adhesive to at least one surface of a second substrate, and drying the surface of the second substrate to which the adhesive is applied; and c. contacting the surface of the first substrate treated in step a with the surface of the second substrate treated in step b to obtain the adhered article; wherein, the cleaning agent contains a polar solvent and an amino-terminated silane coupling agent; the cleaning agent has a concentration of 0.2%-1.2%; the second substrate is pretreated with a treatment agent, the treatment agent contains a halide and an organic solvent having a polarity of greater than 2.4, the treatment agent has a concentration of 1%-3%. The adhered article of the present invention has excellent bond strength and heat resistance.

## Description

### Technical Field

The present invention relates to a method for preparing an adhered article by conducting single-sided gluing and an adhered article prepared therewith, and the use of an adhered article in the production of footwear.

### Background Technology

The traditional process of bonding shoe materials in the footwear industry is the double-sided gluing process, that is, applying adhesives to both the shoe sole and the shoe upper or to both the shoe midsole and the shoe outsole. Moreover, it is often necessary to clean/wash and prime the shoe midsole, the shoe outsole and the shoe upper before applying adhesives thereto. For example, CN1235966C discloses a laminate comprising a foamed product layer and a polyolefin material layer, the bonding of which is carried out by using the double-sided gluing method. CN106316147A discloses an activator, comprising a modified aminosilane and a solvent; the modified aminosilane is prepared from the reaction of an aminosilane compound and a silane modifier. The silane modifier is one or more of monoepoxy glycidyl ether, bis-epoxy glycidyl ether and poly-epoxy glycidyl ether. It is desired to find a simplified shoemaking process in the footwear industry, because the double-sided gluing process has the problems of complicated working procedure, low production efficiency, and high labor cost.

The single-sided gluing process reduces the gluing step, saves labor force, improves production efficiency, and also prevents adhesives from contaminating the shoe upper. Therefore, it is highly desired in the footwear industry. The difficulty with the single-sided gluing process is the need to find suitable cleaning/washing agents and adhesives.

Hot melt adhesives can be applied in the single-sided gluing process, but their applications are limited in the footwear industry due to their disadvantages such as poor initial performance and high equipment costs. The industry has also attempted to use an aqueous polyurethane dispersion adhesive for the single-sided gluing process.

CN1098154C discloses a method for producing a laminate by injection molding, comprising the steps of applying to a substrate a primer comprising an organic solvent and an ethylene or propylene polymer on which an unsaturated carboxylic acid or its anhydride, ester, amide, imide or metal salt is grafted, and injection molding the ethylene or propylene polymer onto the substrate to which the primer is applied. This method is not suitable for an application process.

CN107802056A discloses a method for making shoes by conducting single-sided gluing of a powder glue. The powder glue used in this method comprises a common polyurethane resin and a common polyamide resin. The mechanical properties of their shoe materials produced by conducting single-sided gluing are much worse than those of the shoe materials produced by conducting double-sided gluing.

CN108587495A discloses a method for improving anaerobic glue performance by treating the bonding surface with a silane coupling agent comprises the following steps: mixing and completely dissolving a silane coupling agent, copper acetate and ethanol in a mass ratio of 1:1:20 to obtain a pretreatment solution; uniformly coating the pretreatment solution on two surfaces to be bonded to obtain pretreated bonding surfaces; and uniformly coating the anaerobic glue on one of the pretreated bonding surfaces, and butt-to-butt fixing the two pretreated bonding surfaces.

CN1095399A discloses a polyurethane melt adhesive, comprising at least one polyurethane prepolymer obtained from at least one polyisocyanate, particularly toluene diisocyanate and/or diphenylmethane diisocyanate, at least one polyalkylene glycol, particularly polypropylene glycol, in a concentration of more than 10% by weight based on the total weight of the melt adhesive and at least one polyester glycol, preferably two polyester glycols having different glass transition temperatures and where appropriate additives such as resin, particularly hydrocarbon resin and stabilizer, especially toluene sulfonyl isocyanate.

### Summary of the Invention

It is an object of the present invention to provide a method for preparing an adhered article by conducting single-sided gluing, the adhered article prepared by said method, and the use of the adhered article in the production of footwear. The adhered article prepared by the method of the present invention has good bond strength and heat resistance.

A method for preparing an adhered article by conducting single-sided gluing according to the present invention comprises the steps of:
a. applying a cleaning agent to at least one surface of a first substrate, and drying the surface of the first substrate to which the cleaning agent is applied;
b. applying an adhesive to at least one surface of a second substrate, and drying the surface of the second substrate to which the adhesive is applied; and
c. contacting the surface of the first substrate treated in step a with the surface of the second substrate treated in step b to obtain the adhered article;
wherein, the cleaning agent contains a polar solvent and an amino-terminated silane coupling agent; the polar solvent has a boiling point of not higher than 135°C and is not isocyanate-reactive; the amino-terminated silane coupling agent conforms a general formula of Y-R¹-Si-(CH₃)ₙX₃₋ₙ, wherein, R¹ is an alkylene having 1-20 carbon atoms, n is 0 or 1, X is selected from -Cl, CH₃O-, C₂H₅O-, (CH₃)₂CHO-and CH₃OCH₂CH₂O-, Y is selected from-NH₂ and-NHR², R² is an alkyl having 1-10 carbon atoms; the cleaning agent has a concentration of 0.2%-1.2%; the second substrate is pretreated with a treatment agent, the treatment agent contains a halide and an organic solvent having a polarity of greater than 2.4, the treatment agent has a concentration of 1%-3%.

According to one aspect of the present invention, there is provided an adhered article prepared by the method according to the present invention.

According to another aspect of the present invention, there is provided the use of the adhered article according to the present invention in the production of footwear.

The adhered article obtained from the single-sided gluing method of the present invention has an initial bond strength of not less than 3 N/mm, a final bond strength of not less than 4.5 N/mm, an opening distance according to the initial heat resistance test of not greater than 5mm, and an opening distance according to the final heat resistance test of not greater than 40mm. The adhered article obtained from the method of the present invention has good bond strength and heat resistance, and the article has the characteristics of firm bonding and difficult degumming at both normal temperature and high temperature.

### Detailed description

The present invention provides a method for preparing an adhered article by conducting single-sided gluing, which comprises the steps of: a. applying a cleaning agent to at least one surface of a first substrate, and drying the surface of the first substrate to which the cleaning agent is applied; b. applying an adhesive to at least one surface of a second substrate, and drying the surface of the second substrate to which the adhesive is applied; and c. contacting the surface of the first substrate treated in step a with the surface of the second substrate treated in step b to obtain the adhered article; wherein, the cleaning agent contains a polar solvent and an amino-terminated silane coupling agent; the polar solvent has a boiling point of not higher than 135°C and is not isocyanate-reactive; the amino-terminated silane coupling agent conforms a general formula of Y-R¹-Si-(CH₃)ₙX₃₋ₙ, wherein, R¹ is an alkylene having 1-20 carbon atoms, n is 0 or 1, X is selected from -Cl, CH₃O-, C₂H₅O-, (CH₃)₂CHO- and CH₃OCH₂CH₂O-, Y is selected from-NH₂ and-NHR², R² is an alkyl having 1-10 carbon atoms; the cleaning agent has a concentration of 0.2%-1.2%; the second substrate is pretreated with a treatment agent, the treatment agent contains a halide and an organic solvent having a polarity of greater than 2.4, the treatment agent has a concentration of 1%-3%. The present invention also provides the adhered article prepared by said method, and the use of the adhered article in the production of footwear.

The expressions "first" and "second" in the first substrate and the second substrate of the present invention are merely intended for convenience of describing two substrates, and not used to distinguish the order of the substrates.

The first substrate and the second substrate of the present invention may be identical or different.

The step a and the step b are in no particular order, and can be performed simultaneously, or the step a can be performed prior to the step b, or the step b can be performed prior to the step a.

The method for calculating the concentration of the treatment agent of the present invention is as follows: (halide mass (g)/treatment agent mass (g))×100%.

The method for calculating the concentration of the cleaning agent of the present invention is as follows: (amino-terminated silane coupling agent mass (g)/cleaning agent mass (g))×100%

The expression "not isocyanate-reactive" according to the present invention refers to containing no Zerevitinov-active hydrogen. Zerevitinov-active hydrogen can be defined with reference to Rompp's Chemical Dictionary (Rommp Chemie Lexikon), 10th ed., Georg Thieme Verlag Stuttgart, 1996. Generally, the group containing Zerevitinov-active hydrogen includes, but is not limited to hydroxyl, amino, and thiol groups.

### Cleaning agent

The concentration of the cleaning agent is preferably 0.3%-1.0%.

The amount of the amino-terminated silane coupling agent is preferably 0.2 wt%-1.2 wt%, most preferably 0.3 wt%-1.0 wt%, relative to the total weight of the cleaning agent.

The polar solvent of the present invention refers to a solvent, in which the solvent molecule is a polar molecule.

The polar solvent preferably has a boiling point of 35°C-135°C.

The polar solvent is preferably one or more of acetone, methylethylketone, ethyl acetate or butyl acetate, a mixture of butyl acetate and cyclohexane and methylethylketone, a mixture of methylethylketone and propylene-glycol diacetate, or a mixture of butyl acetate and methylethylketone and propylene glycol methyl ether acetate.

The polar solvent is further preferably selected from methylethylketone, butyl acetate, a mixture of methylethylketone and ethyl acetate, a mixture of methylethylketone and butyl acetate, a mixture of methylethylketone and propylene-glycol diacetate, a mixture of acetone and butyl acetate, a mixture of ethyl acetate and butyl acetate, a mixture of ethyl acetate and butyl acetate and methylethylketone, a mixture of butyl acetate and cyclohexane and methylethylketone, a mixture of butyl acetate and methylethylketone and propylene glycol methyl ether acetate.

The polar solvent is most preferably methylethylketone.

Said R² is preferably an alkyl having 1-6 carbon atoms, most preferably an alkyl having 1-4 carbon atoms.

The amino-terminated silane coupling agent is preferably one or more of the following: γ-aminopropyltrimethoxysilane, N-β-(aminoethyl)-γ-aminopropyltrimethoxysilane and bis-(γ-trimethoxysilyl propyl)amine.

The cleaning agent most preferably contains methylethylketone and an amino-terminated silane coupling agent, the cleaning agent has a concentration of 0.3%-1.0%.

The cleaning agent contain no adhesive.

The polar solvent and the amino-terminated silane coupling agent in the cleaning agent can be stored separately or premixed and present in a solution form.

### First substrate

The first substrate is those commonly used in the art, particularly materials that can be used in the shoe midsole, the shoe upper, and the toe cap. The first substrate is preferably one or more of the following: a polyurethane-based material and a polyvinyl chloride-based material, most preferably a polyurethane-based synthetic leather.

### Adhesive

The adhesive may be a one-component adhesive, a two-component adhesive or a threecomponent adhesive commonly used in the art.

The adhesive is preferably one or more of the following: a solvent-type polyurethane, a solvent-type polychloroprene rubber, an aqueous polyurethane dispersion, an aqueous polychloroprene rubber, and a hot melt adhesive-type polyurethane; further preferably an aqueous polyurethane dispersion, most preferably a two-component aqueous polyurethane dispersion.

The two-component aqueous polyurethane dispersion preferably contains an aqueous polyurethane dispersion and an isocyanate curing agent.

Said aqueous polyurethane dispersion is preferably an anionic aqueous polyurethane dispersion.

The solid content of said aqueous polyurethane dispersion is preferably 40wt%-60wt%, relative to the total weight of said aqueous polyurethane dispersion.

The isocyanate curing agent is preferably a water-dispersible isocyanate, most preferably a trimer of aliphatic isocyanate.

The isocyanate curing agent preferably meets at least one of the following characteristics:
The isocyanate group content is 15wt%-25wt%, relative to the total weight of the isocyanate curing agent;
The viscosity is 2000 mPa·s - 4000 mPa·s, measured with the MV-DIN rotor according to DIN EN ISO 3219:1994-10 at 23°C and a shear rate of 10 s⁻¹;
The isocyanate functionality is 2.8-3.5; and
The number-average molecular weight is 200 g/mol-2000 g/mol.

### Second substrate

The second substrate is those commonly used in the art, particularly the rubber-type materials that can be used in the shoe outsole and the shoe midsole.

The second substrate is preferably one or more of the following: natural rubber and synthetic rubber. The synthetic rubber is preferably one or more of the following: nitrile-butadiene rubber, TPU, TPR and a polyvinyl chloride-based material

Before applying the adhesive, the second substrate is pretreated with a treatment agent.

The organic solvent having a polarity of greater than 2.4 in the treatment agent is preferably one or more of the following: ethyl acetate, butyl acetate, butanone and acetone.

The halide is preferably trichloroisocyanuric acid.

The treatment agent most preferably contains trichloroisocyanuric acid and ethyl acetate, and the treatment agent has a concentration of 1%-3%.

The pretreatment preferably comprises applying the treatment agent to at least one surface of the second substrate and drying.

Before applying the adhesive, the second substrate can be subjected to the treatment of sanding or cleaning/washing.

The sanding is used to increase the surface roughness of the substrate. The sanding can be mechanical sanding.

The cleaning/washing is the use of a solvent to remove oil or dust from the surface of the substrate, and said solvent is those well known to those skilled in the art.

### Applying

The applying may be applying the cleaning agent or the adhesive to the entire surface of the substrate or to only one or more parts of the surface of the substrate.

The applying can be brush coating, impregnation, spraying, roller coating, knife coating, flow coating, casting, printing or transfer printing, preferably brush coating, impregnation or spraying.

### Drying

The drying of the surface of the first substrate to which the cleaning agent is applied and the drying of the surface of the second substrate to which the adhesive is applied may refer to drying only the surface of the substrate, and may also refer to drying a part of the substrate or the whole substrate, including the surface of the substrate to which the cleaning agent or the adhesive is applied.

The drying can remove a volatile component. Said volatile component can be water.

Said drying is preferably one or more of the following: infrared heat radiation, near-infrared heat radiation, microwaves, and using a convection furnace or a spray dryer under the condition of the elevated temperature.

The temperature of the drying should not be higher than the temperature limit beyond which the substrate deforms in an uncontrolled manner or encounters other damages.

### Contacting

Preferably, before the step c, the surface of the second substrate to which the adhesive is applied through the treatment of step b is subjected to thermal activation at a thermal activation temperature of 45°C-75°C.

The thermal activation can be oven activation or infrared activation.

The contacting is preferably performed before the temperature of the surface of the second substrate is decreased to a temperature lower than the temperature at which the adhesive has an adhesion capability, further preferably before the temperature of the surface of the second substrate is not lower than 60°C.

The first substrate is not treated with an adhesive before contacting with the second substrate.

### Adhered article

The adhered article has an initial bond strength of preferably not less than 3 N/mm, most preferably 3 N/mm-5.5 N/mm.

The adhered article has a final bond strength of preferably not less than 4.5 N/mm, most preferably 4.5 N/mm-7.0 N/mm.

The adhered article has an opening distance according to the initial heat resistance test of preferably not greater than 5mm, most preferably 1mm-5mm.

The adhered article has an opening distance according to the final heat resistance test of preferably not greater than 40mm, most preferably 0mm-37mm.

The adhered article is preferably footwear.

### Brief description of the drawings

The present invention will be illustrated and described in more detail below with reference to the accompanying figures, in which:
Figure 1 is a schematic view of sample bonding;
Figure 2 is a schematic view of the test for heat resistance of a sample.

### Examples

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

Unless otherwise indicated, all numbers expressing quantities of ingredients, reaction conditions, and the like used in the specification and claims are to be understood as being modified by the term "about". Accordingly, the numerical parameters set forth herein are approximations that can vary depending upon the desired properties to be obtained, unless indicated to the contrary.

The expression "and/or" as used herein means one or all of the mentioned elements.

The use of "comprise" and "contain" herein encompasses the presence of the mentioned elements alone and the presence of other elements not mentioned in addition to the mentioned elements.

All percentages in the present invention are by weight unless otherwise stated.

The analyses and measurements of the present invention are all carried out at 23±2°C, unless otherwise stated.

### Raw materials and reagents

Silquest A-1100: γ-aminopropyltrimethoxysilane, commercially available from Momentive China Co., Ltd.

Silquest A-1120: N-β-(aminoethyl)-γ-aminopropyltrimethoxysilane, commercially available from Momentive China Co., Ltd.

Silquest A-1170: bis-(y-trimethoxysilylpropyl)amine, commercially available from Momentive China Co., Ltd.

Silquest A-1524: γ-(biuret)propyltrimethoxysilane, commercially available from Momentive China Co., Ltd.

Silquest A-link 25: γ-(isocyanato)propyltriethoxysilane, commercially available from Momentive China Co., Ltd.

Desmocoll 526: polyurethane resin, commercially available from Covestro Co., Ltd.

Dispercoll U 54: an anionic aqueous polyurethane dispersion having a solid content of 50±1%, commercially available from Covestro Co., Ltd.

Polyester I: 1,4-butanediol polyadipate diol having an OH value of 50.

Polyester II: a polyester diol composed of 1,6-hexandiol, neopentyl glycol and adipic acid having an OH value of 66.

Desmodur^{®}H: 1,6-hexamethylene diisocyanate, commercially available from Covestro Co., Ltd.

Desmodur^{®}I: isophorone diisocyanate, commercially available from Covestro Co., Ltd.

Dispercoll U 58/1: an anionic aqueous polyurethane dispersion having a solid content of 50±1%, commercially available from Covestro Co., Ltd.

Desmodur XP 2802: a hydrophilically modified polycarbodiimide having a solid content of 40 wt%, a solid component melting point of 23.16°C, a carbodiimide functional group content of 1 mmol/g, a number-average molecular weight of 1779, a weight-average molecular weight of 3258, and a carbodiimide functional group functionality of 4.5, commercially available from Covestro Co., Ltd.

Bayhydur XP 2655: an HDI-based aliphatic trimer having an NCO group content of 20.8 wt%, a viscosity of about 3500 mPa·s (23°C), a solid content of 100 wt%, an isocyanate functionality of 3.2, and a number-average molecular weight of 700 g/mol,, commercially available from Covestro Co., Ltd.

MEK: methylethylketone, commercially available from Yonghua Chemical Technology (Jiangsu) Co., Ltd.

Black rubber: a shoe sole rubber made of nitrile-butadiene rubber, commercially available from DongGuan WanTai Rubber Co., Ltd.

L-10: PU synthetic leather, commercially available from Anhui Anli Synthetic Leather Corporation.

L-27A: PU synthetic leather, commercially available from Anhui Anli Synthetic Leather Corporation.

L-35: PU synthetic leather, commercially available from Anhui Anli Synthetic Leather Corporation.

Borchigel L75N: a thickener, commercially available from OMG company.

### Preparation of adhesive 1

99.2g of Dispercoll U 58/1 and 0.8g of Borchigel L75N at a concentration of 25% were mixed to reach a viscosity of about 5000 mPa·s. After the mixture was stirred for 10 minutes, 5g of Bayhydur XP 2655 was added, and the resulting mixture was stirred for another 10 minutes to give the adhesive 1.

### Preparation of adhesive 2

450g of polyester I and 42.5g of polyester II were dehydrated at 110°C and 100 mbar for 1 hour, and 2.25g of 1,4-butanediol was further added and the mixture was cooled while being stirred. 37.84g of Desmodur^{®} H was added at 60°C, then 25g of Desmodur^{®} I was added, and the mixture was stirred at 80-90°C until an isocyanate content of 1.3% was reached. The reaction mixture was dissolved in 840g of acetone and cooled to 50°C. A solution of 5.6g of N-(2-aminoethyl)-2-aminoethanesulfonic acid sodium salt, 2.4g of diethanolamine and 0.8g of hydroxy ethyl ethylenediamine in 656g of water was added to the reaction mixture solution and vigorously stirred for 30 minutes, and then the resulting mixture was dispersed by adding 510g of water. Then the resulting dispersion was distillated to separate off acetone and obtain an aqueous polyurethane dispersion. 100g of the above-mentioned aqueous polyurethane urea dispersion and 2g of Desmodur XP 2802 were stirred under a rotation speed of 1000rpm and mixed for 10-15 minutes, then about 1g of Borchigel L75N having a solid content of 25% was added and mixed to reach the viscosity of about 5000 mPa·s. The mixture was stirred for 10 minutes, 5g of Bayhydur XP 2655 was added, and the resulting mixture was stirred for another 10 minutes to give the adhesive 2.

### Substrates in Examples and Comparative Examples

According to the amounts of the components of the cleaning agent shown in Table 1, the components were mixed and manually stirred for 5-10 minutes to give the cleaning agent. The surface of the PU synthetic leather (first substrate) (2 cm wide, 8 cm long) to be adhered was cleaned/washed with fibers containing the cleaning agent, gently scrubbed for several times, then dried in an oven at a temperature of 60°C for 3 minutes, and kept standby.

The surface of the sanded black rubber (second substrate) (2 cm wide, 8 cm long) to be adhered was cleaned/washed with a fibre cloth or yarn containing methylethylketone, and the surface of the cleaned/washed black rubber was exposed to a fume hood until the cleaned/washed surface was dry. Treatment agents (treatment agent 1 contained trichloroisocyanuric acid and ethyl acetate, treatment agent 1 had a concentration of 2%; treatment agent 2 contained Silquest A-1170 and methylethylketone, treatment agent 2 had a concentration of 1%) shown in Table 1 were applied to the surface, dried in an oven at a temperature of 60°C for 3 minutes. Then, the adhesive shown in Table 1 was applied to the surface of the black rubber with a fine brush, and the application amount was 120 g/m² (wet). Finally, the surface of the black rubber to which the adhesive was applied was dried in an air-circulating oven at 60°C until the moisture in the adhesive film was completely removed, and kept standby.

### Bond strength test

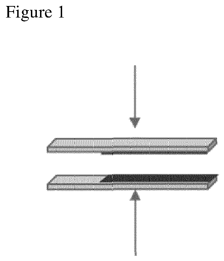

The surface of the black rubber that was ready to be used was heated to 60°C, and then the black rubber was quickly adhered to the PU synthetic leather that was ready to be used at a pressure of 4 bar with a flat press (China Rongtai), as shown in Figure 1, and the adhesion was maintained for 30 seconds to give a sample of the adhered article.

The bond strength of the sample was tested by using a BZ2.5/TN1S-type tensile machine from the ZWICK company according to DIN EN 1392. The unbonded parts of the black rubber and the PU synthetic leather were respectively clamped on the upper and lower clamps of the tensile machine. When the bonded surfaces of the black rubber and the PU synthetic leather were tested at a stretching rate of 100 mm/min and a stretching length of 50 mm to show a 180° peeling manner, the tensile force used at this time was recorded as the bond strength and the results were shown in Table 1. The initial bond strength (tested at 30 minutes after bonding) should be not less than 3 N/mm, and the final bond strength (tested at 24 hours after bonding) should be not less than 4.5 N/mm. The higher bond strength obtained by the test indicates the higher bonding power between the substrates and the firmer substrate bonding.

### Heat resistance test

The surface of the black rubber that was ready to be used was heated to 60°C, and then the black rubber was quickly adhered to the PU synthetic leather that was ready to be used at a pressure of 4 bar with a flat press (China Rongtai), as shown in Figure 1, and the adhesion was maintained for 10 seconds to give a sample of the adhered article.

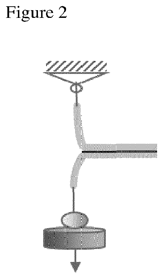

Initial heat resistance test: The sample was placed at room temperature for 2 minutes, and then loaded with a 500g weight at 80°C for 30 minutes, as shown in Figure 2. The opening distance of the sample after being maintained for 30 minutes at 80°C was recorded. If the coating could not be maintained for 30 minutes (that is, fully opened due to degumming), the time for the coating to be fully opened due to degumming was recorded. The results were shown in Table 1. The opening distance was the separation length of the adhesion parts of the sample, which was measured with a dividing ruler. The longer the opening distance was, the worse the heat resistance of the sample was. Fully opened due to degumming meant that the adhesion parts of the sample were completely separated, and therefore fully opened due to degumming was deemed that the sample failed the heat resistance test. The opening distance should be not greater than 5 mm.

Final heat resistance test: The sample was placed at room temperature for 24 hours, and then loaded with a 1000g weight at 80 °C and maintained for 30 minutes, as shown in Figure 2. The opening distance of the sample after being maintained for 30 minutes at 80 °C was recorded. If the coating could not be maintained for 30 minutes (that is, fully opened due to degumming), the time for the coating to be fully opened due to degumming was recorded. The results were shown in Table 1. The opening distance was the separation length of the adhesion part of the sample, which was measured with a dividing ruler. The longer the opening distance was, the worse the heat resistance of the sample was. Fully opened due to degumming meant that the adhesion parts of the sample were completely separated, and therefore fully opened due to degumming was deemed that the sample failed the heat resistance test. The opening distance should be not greater than 40 mm.

### Examples 1-9 and Comparative Examples 1-12

Table 1 listed the components of the treatment agents and the cleaning agents of Examples 1-9 and Comparative Examples 1-12 and the test results of the bond strength and the heat resistance for the samples of the adhered articles.

**Table 1: the components of Examples and Comparative Examples and the test results for the samples of the adhered articles**

| | Treatment agent | Adhesive | PU synthetic leather | Component and concentration of the cleaning/washing agent | initial bond strength (N/mm) | final bond strength (N/mm) | Initial heat resistance | final heat resistance |
|---|---|---|---|---|---|---|---|---|
| Comparative Example 1 | Treatment agent 1 | Adhesive 1 | L-10 | MEK | 3.3 | 5.3 | 5 min | 9 min |
| Example 1 | Treatment agent 1 | Adhesive 1 | L-10 | MEK, Silquest A-1100 at a concentration of 0.5% | 3.6 | 5.7 | 2mm | 37mm |
| Example 2 | Treatment agent 1 | Adhesive 1 | L-10 | MEK, Silquest A-1100 at a concentration of 1.0% | 3.0 | 4.6 | 1mm | 25mm |
| Comparative Example 2 | Treatment agent 1 | Adhesive 1 | L-10 | MEK, Silquest A-1120 at a concentration of 0.1% | 3.2 | 5.3 | 12 min | 18 min |
| Example 3 | Treatment agent 1 | Adhesive 1 | L-10 | MEK, Silquest A-1120 at a concentration of 0.3% | 3.5 | 5.4 | 5mm | 6mm |
| Example 4 | Treatment agent 1 | Adhesive 1 | L-10 | MEK, Silquest A-1120 at a concentration of 0.5% | 3.9 | 6.8 | 1mm | 1mm |
| Example 5 | Treatment agent 1 | Adhesive 1 | L-10 | MEK, Silquest A-1120 at a concentration of 1.0% | 3.9 | 6.3 | 1mm | 1mm |
| Comparative Example 3 | Treatment agent 1 | Adhesive 1 | L-10 | MEK, Silquest A-1120 at a concentration of 1.5% | 2.9 | 3.9 | 1mm | 1mm |
| Example 6 | Treatment agent 1 | Adhesive 1 | L-10 | MEK, Silquest A-1170 at a concentration of 0.5% | 3.2 | 5.3 | 1mm | 1mm |
| Example 7 | Treatment agent 1 | Adhesive 1 | L-10 | MEK, Silquest A-1170 at a concentration of 1.0% | 3.2 | 4.8 | 1mm | 1mm |
| Comparative Example 4 | Treatment agent 1 | Adhesive 1 | L-10 | MEK, Silquest A-1524 at a concentration of 0.5% | 4.3 | 6.5 | 6 min | 25 min |
| Comparative Example 5 | Treatment agent 1 | Adhesive 1 | L-10 | MEK, Silquest A-1524 at a concentration of 1.0% | 3.5 | 5.3 | 11 min | 10mm |
| Comparative Example 6 | Treatment agent 1 | Adhesive 1 | L-10 | MEK, Silquest A-link25 at a concentration of 0.5% | 3.2 | 3.8 | 5 min | 5 min |
| Comparative Example 7 | Treatment agent 1 | Adhesive 1 | L-10 | MEK, Silquest A-link25 at a concentration of 1.0% | 3.6 | 3.9 | 7 min | 9 min |
| Comparative Example 8 | Treatment agent 1 | Adhesive 1 | L-27A | MEK | 4.8 | 4.6 | 5 min | 8 min |
| Example 8 | Treatment agent 1 | Adhesive 1 | L-27A | MEK, Silquest A-1170 at a concentration of 0.5% | 5.1 | 4.6 | 3mm | 1mm |
| Comparative Example 9 | Treatment agent 1 | Adhesive 2 | L-35 | MEK | 2.8 | 6.5 | 19 min | 66mm |
| Example 9 | Treatment agent 1 | Adhesive 2 | L-35 | MEK, Silquest A-1170 at a concentration of 0.5% | 3.0 | 6.1 | 5mm | 0mm |
| Comparative Example 10 | Treatment agent 1 | Adhesive 1 | L-10 | MEK, Desmocoll 526 at a concentration of 1.0% | 4.1 | 6.1 | 6 min | 10 min |
| Comparative Example 11 | Treatment agent 1 | Adhesive 1 | L-10 | MEK, Dispercoll U54 at a concentration of 1.0% | 4.4 | 7.1 | 13 min | 22 min |
| Comparative Example 12 | Treatment agent 2 | Adhesive 1 | L-10 | MEK, Silquest A-1170 at a concentration of 1.0% | 0.3 | 0.3 | 8 min | 3 min |

It could be seen from Example 1-9 that the adhered articles obtained from the single-sided gluing method of the examples of the present invention had the initial bond strength of not less than 3 N/mm, the final bond strength of not less than 4.5 N/mm, the opening distance according to the initial heat resistance test of not greater than 5mm, and the opening distance according to the final heat resistance test of not greater than 40mm. The adhered articles obtained from the process of the present invention all had good bond strength and heat resistance.

It could be seen from Comparative Examples 1-3 and Examples 1-7 that, when the concentration of the cleaning agent was 0.2%-1.2% and a suitable amino-terminated silane coupling agent was chosen, the adhered article obtained from the single-sided gluing method would have good bond strength and heat resistance. The cleaning agent of Comparative Example 1 merely contained methylethylketone. The adhered article obtained from the method of Comparative Example 1 was fully opened due to degumming when the initial heat resistance test performed for 5 minutes and fully opened due to degumming when the final heat resistance test performed for 9 minutes. This adhered article had poor heat resistance. The concentration of the cleaning agent of Comparative Example 2 was 0.1%. The adhered article obtained from the method of Comparative Example 2 was fully opened due to degumming when the initial heat resistance test performed for 12 minutes and fully opened due to degumming when the final heat resistance test performed for 18 minutes. This adhered article had poor heat resistance. The concentration of the cleaning agent of Comparative Example 3 was 1.5%. The adhered article obtained from the method of Comparative Example 3 had an initial bond strength of 2.9 N/mm and a final bond strength of 3.9 N/mm, which were lower than the requirements for the bond strength. This article had poor bond strength.

It could be seen from Comparative Examples 4-7 that the cleaning agents of the comparative examples contained γ-(biuret)propyltrimethoxysilane or γ-(isocyanato)propyltriethoxysilane, and the adhered articles of the comparative examples could not balance the bond strength and heat resistance.

The cleaning agents used in the single-sided gluing methods of Comparative Examples 8-9 were methylethylketone, and the adhered articles obtained from the preparation thereof were compared with the adhered articles of Examples 8-9 of the present invention respectively. The adhered articles of the comparative examples were poor in the initial heat resistance and the final heat resistance.

It could be seen from Comparative Examples 10-11 that the cleaning agents of the comparative examples contained Desmocoll 526 or Dispercoll U 54, and the adhered articles of the comparative examples were poor in the initial heat resistance and the final heat resistance.

It could be seen from Comparative Example 12 that, when the treatment agent contained Silquest A-1170 and methylethylketone, the article of the comparative example were poor both in the bond strength and the heat resistance.

It will be evident to those skilled in the art that the present invention is not limited to the details set forth, and that the present invention may be embodied in other specific forms without departing from the spirit or essential characteristics thereof. The present embodiments are therefore to be considered in all respects as illustrative and not limiting, and thereby the scope of the present invention is indicated by the appended claims rather than by the foregoing description; and moreover any changes, as long as it falls within the meaning and range of the equivalence to the claims, should be considered as a part of the present invention.

## Claims

1. A method for preparing an adhered article by conducting single-sided gluing, comprising the steps of:
a. applying a cleaning agent to at least one surface of a first substrate, and drying the surface of the first substrate to which the cleaning agent is applied;
b. applying an adhesive to at least one surface of a second substrate, and drying the surface of the second substrate to which the adhesive is applied; and
c. contacting the surface of the first substrate treated in step a with the surface of the second substrate treated in step b to obtain the adhered article;
wherein, the cleaning agent contains a polar solvent and an amino-terminated silane coupling agent; the polar solvent has a boiling point of not higher than 135°C and is not isocyanate-reactive; the amino-terminated silane coupling agent conforms a general formula of Y-R¹-Si-(CH₃)ₙX₃₋ₙ, wherein, R¹ is an alkylene having 1-20 carbon atoms, n is 0 or 1, X is selected from -Cl, CH₃O-, C₂H₅O-, (CH₃)₂CHO- and CH₃OCH₂CH₂O-, Y is selected from-NH₂ and-NHR², R² is an alkyl having 1-10 carbon atoms; the cleaning agent has a concentration of 0.2%-1.2%; the second substrate is pretreated with a treatment agent, the treatment agent contains a halide and an organic solvent having a polarity of greater than 2.4, the treatment agent has a concentration of 1%-3%.

2. The method according to claim 1, which is **characterized in that** the polar solvent is one or more of acetone, methylethylketone, ethyl acetate or butyl acetate, a mixture of butyl acetate and cyclohexane and methylethylketone, a mixture of methylethylketone and propylene-glycol diacetate, a mixture of butyl acetate and methylethylketone and propylene glycol methyl ether acetate; further preferably selected from methylethylketone, butyl acetate, a mixture of methylethylketone and ethyl acetate, a mixture of methylethylketone and butyl acetate, a mixture of methylethylketone and propylene-glycol diacetate, a mixture of acetone and butyl acetate, a mixture of ethyl acetate and butyl acetate, a mixture of ethyl acetate and butyl acetate and methylethylketone, a mixture of butyl acetate and cyclohexane and methylethylketone, a mixture of butyl acetate and methylethylketone and propylene glycol methyl ether acetate, most preferably methylethylketone.

3. The method according to claim 1 or 2, which is **characterized in that** said R² is an alkyl having 1-6 carbon atoms, most preferably an alkyl having 1-4 carbon atoms.

4. The method according to any of claims 1-3, which is **characterized in that** the amino-terminated silane coupling agent is one or more of the following: γ-aminopropyltrimethoxysilane, N-γ-(aminoethyl)-γ-aminopropyltrimethoxysilane and bis-(v-trimethoxysilyl propyl)amine.

5. The method according to any of claims 1-4, which is **characterized in that** the cleaning agent has a concentration of 0.3%-1.0%.

6. The method according to any of claims 1-5, which is **characterized in that** the cleaning agent contains methylethylketone and amino-terminated silane coupling agent, the cleaning agent has a concentration of 0.3%-1.0%.

7. The method according to any of claims 1-6, which is **characterized in that** the organic solvent having a polarity of greater than 2.4 is one or more of the following: ethyl acetate, butyl acetate, butanone and acetone.

8. The method according to any of claims 1-7, which is **characterized in that** the halide is trichloroisocyanuric acid.

9. The method according to any of claims 1-8, which is **characterized in that** the treatment agent contains trichloroisocyanuric acid and ethyl acetate, the treatment agent has a concentration of 1%-3%.

10. An adhered article prepared by the method according to any one of claims 1-9.

11. Use of the adhered article according to claim 10 in the production of footwear.
